## Europäisches Patentamt
## European Patent Office
## Office européen des brevets

(11) Veröffentlichungsnummer: **0 177 697**
**A1**

(19)

(12) # EUROPÄISCHE PATENTANMELDUNG

(21) Anmeldenummer: **85109646.1**

(22) Anmeldetag: **31.07.85**

(51) Int. Cl.⁴: **G 02 F 1/133**

(30) Priorität: **04.10.84 DE 3436409**

(43) Veröffentlichungstag der Anmeldung: **16.04.86**
**Patentblatt 86/16**

(84) Benannte Vertragsstaaten: **DE FR GB IT NL SE**

(71) Anmelder: **VDO Adolf Schindling AG, Gräfstrasse 103, D-6000 Frankfurt/Main (DE)**

(72) Erfinder: **Baeger, Holm, Dr., Salzbornstrasse 1, D-6231 Schwalbach a. Ts. (DE)**

(74) Vertreter: **Klein, Thomas, Dipl.-Ing. (FH), Sodener Strasse 9 Postfach 6140, D-6231 Schwalbach a. Ts. (DE)**

(54) **Flüssigkristallanzeige.**

(57) Die Erfindung betrifft eine Flüssigkristallanzeige zur Darstellung von Zeichen und Symbolen, mit einer Flüssigkristallzelle (1) und jeweils einem auf der Beobachterseite und der Rückseite der Flüssigkristallzelle (1) angeordneten Polarisator (8 und 10). Weiterhin ist hinter dem rückseitigen Polarisator (8) ein Reflektor (9) angeordnet. Der beobachterseitige Polarisator (10) ist mit seiner Ebene gegenüber der Ebene der Flüssigkristallzelle (1) geneigt angeordnet und seine der Flüssigkristallzelle (1) zugewandte Fläche als Umlenkfläche (15) ausgebildet. Dabei ist die Umlenkfläche (15) etwa quer zur Ebene der Flüssigkristallzelle (1) lichtbeaufschlagbar.

0177697

VDO Adolf Schindling AG

Gräfstraße 103
6000 Frankfurt/Main
G-R Kl-kmo / 1795
18. September 1984

## Flüssigkristallanzeige

Die Erfindung betrifft eine Flüssigkristallanzeige zur Darstellung von Zeichen und Symbolen, mit einer Flüssigkristallzelle und jeweils einem auf der Beobachterseite und der Rückseite der Flüssigkristallzelle angeordneten Polarisator sowie mit einem hinter dem rückseitigen Polarisator angeordneten Reflektor.

Bei derartigen Flüssigkristallanzeigen ohne Fremdbeleuchtung ist es bekannt, daß Umgebungslicht von der Beobachterseite her durch den ersten Polarisator, die Flüssigkristallzelle und den zweiten Polarisator zum Reflektor gelangt und von diesem auf etwa dem gleichen Weg wieder zur Beobachterseite reflektiert wird. Da das Licht auf diesem Weg viermal durch einen Polarisator hindurchtreten muß und es bei jedem dieser Durchtritte zu Lichtverlusten kommt, ist der Kontrast der dargestellten Zeichen verringert.

./.

Dies ist von besonderem Nachteil bei der Darstellung von
hellen Zeichen in dunklem Umfeld, da es bei dieser Art
Darstellung prinzipbedingt schon zu einem Lichtverlust
in der Flüssigkristallzelle kommt.

Es ist daher Aufgabe der Erfindung eine Flüssigkristallanzeige nach dem Oberbegriff zu schaffen, deren Zeichen und
Symbole kontraststark darstellbar sind.

Diese Aufgabe wird erfindungsgemäß dadurch gelöst, daß
der beobachterseitige Polarisator mit seiner Ebene gegenüber der Ebene der Flüssigkristallzelle geneigt angeordnet und seine der Flüssigkristallanzeige zugewandte Fläche
als Umlenkfläche ausgebildet ist, wobei die Umlenkfläche
etwa quer zur Ebene der Flüssigkristallzelle lichtbeaufschlagbar ist.

Durch diese Ausbildung ist nur noch dreimal ein Lichtdurchtritt durch einen Polarisator erforderlich, wodurch der
Kontrast der Anzeige erhöht wird.
Der beobachterseitige Polarisator erfüllt eine Doppelfunktion, in dem er zum einen als Umlenkfläche für das in die
Flüssigkristallzelle einzuleitende Umgebungslicht dient
und gleichzeitig seine Normalfunktion als Polarisator beibehält.

Besonders vorteilhaft und platzsparend ist eine solche
Flüssigkristallanzeige anzuwenden, wenn sie in einem an
der Rückseite der Flüssigkristallzelle geschlossenen Gehäuse eingebaut ist und von dieser Seite her keine Beleuchtung möglich ist.

Um möglichst viel Licht zur Flüssigkristallzelle umzulenken, ist vorzugsweise der Polarisator um einen Winkel kleiner 45° geneigt.

Die Ebene des Polarisators kann konvex bzw. konkav gewölbt sein.

Der der Flüssigkristallzelle nähere Rand des Polarisators kann im Bereich eines Randes der Flüssigkristallzelle angeordnet sein, wodurch der erforderliche Platzbedarf und die Baugröße gering gehalten werden.

Der Polarisator kann auf einer transparenten Platte angeordnet sein, was besonders vorteilhaft ist, wenn der Polarisator z.B. eine flexible Folie ist.

Zum Einlaß des Umgebungslichts kann im Bereich des größten Abstandes zwischen dem Polarisator und der Flüssigkristallzelle ein etwa quer zur Ebene der Flüssigkristallzelle durchstrahlbares Lichteinlaßfenster angeordnet sein.

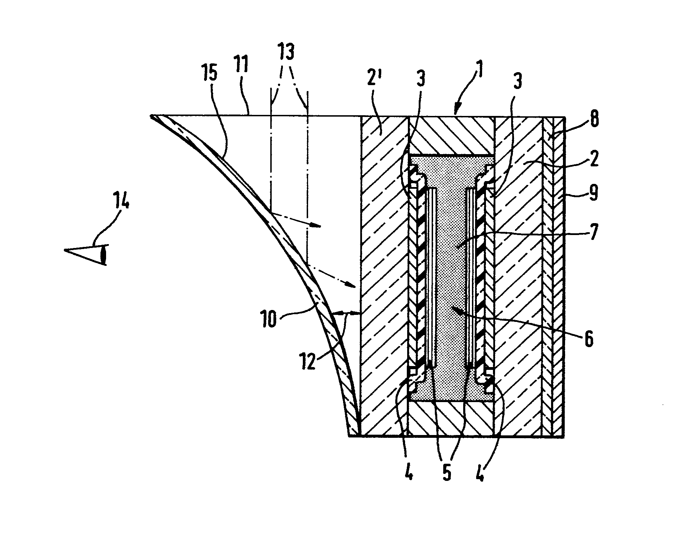

Ein Ausführungsbeispiel der Erfindung ist in der Zeichnung dargestellt und wird im folgenden näher beschrieben. Die in der einzigen Figur der Zeichnung im Querschnitt dargestellte Flüssigkristallanzeige besteht aus einer Flüssigkristallzelle 1, die zwei im Abstand zueinander angeordnete Glasplatten 2 und 2' aufweist. Auf den einander zugewandten Flächen der Glasplatten 2 und 2' ist jeweils eine Elektrode 3 bzw. Elektrodenkonfiguration und darüber eine Isolierschicht 4 und eine Orientierungsschicht 5 angeordnet.

Die zwischen den Glasplatten 2 und 2' gebildete geschlossene Kammer 6 ist mit einer Flüssigkristallsubstanz 7 gefüllt.

Auf der rückseitigen Glasplatte 2 aufliegend ist ein Polarisator 8 und darauf wiederum ein vorzugsweise diffuser Reflektor 9 angeordnet.

vor der beobachterseitigen Glasplatte 2' ist ein konkaver Polarisator 10 derart angeordnet, daß der untere Rand des Polarisators 10 an dem unteren Rand der Glasplatte 2' anliegt und die Ebene des Polarisators 10 gegenüber der Ebene der Flüssigkristallzelle 1 um einen bestimmten Winkel 12 geneigt ist. Dadurch besitzt der obere Rand des Polarisators 10 den größten Abstand zur Flüssigkristallzelle 1.

In diesem Bereich des größten Abstandes zwischen Polarisator 10 und der Flüssigkristallzelle 1 ist ein etwa quer zur Ebene der Flüssigkristallzelle 1 vom Umgebungslicht durchstrahlbares Lichteinlaßfenster 11 angeordnet, das durch eine nicht dargestellte Glasplatte verschlossen sein kann.

Die der Flüssigkristallzelle 1 zugewandte Fläche des Polarisators 10 ist als Umlenkfläche ausgebildet und lenkt entsprechend den Strahlen 13 das durch das Lichteinlaßfenster 11 eintretende Umgebungslicht zur Flüssigkristallzelle 1 um.

Diese umgelenkten Strahlen 13 treten durch die Flüssigkristallzelle 1 hindurch und werden an dem Reflektor 9 diffus durch die Flüssigkristallzelle 1 und den Polarisator 10 hindurch zu einem Beobachter 14 reflektiert.

Dadurch, daß der Winkel 12 kleiner als 45° ist, wird zwar das durch das Lichteinlaßfenster 11 eintretende Licht fast vollständig zur Flüssigkristallzelle 1 umgelenkt, während das von dem Reflektor 9 reflektierte Licht aber praktisch vollständig durch den Polarisator 10 zum Beobachter 14 hin durchtritt.

0177697

Zusätzlich zu dem durch das Lichteinlaßfenster 11 eintretenden Licht wird weiterhin das von der Beobachterseite her eintretende Licht ausgenutzt, so daß die ausgenutzte Gesamtlichtmenge erheblich erhöht ist.
Diese Gesamtlichtmenge kann noch weiter erhöht werden, wenn das Lichteinlaßfenster als Sammellinse ausgebildet ist.

Zur Kompensation der Polarisatorwirkung der Sammellinse kann das Lichteinlaßfenster einen Polarisator enthalten, dessen Polarisationsrichtung um etwa $90°$ zum beobachterseitigen Polarisator gedreht ist.

0177697

VDO Adolf Schindling AG

Gräfstraße 103
6000 Frankfurt/Main

G-R Kl-kmo  / 1795

18. September 1984

Patentansprüche

1. Flüssigkristallanzeige zur Darstellung von Zeichen und Symbolen, mit einer Flüssigkristallzelle und jeweils einem auf der Beobachterseite und der Rückseite der Flüssigkristallzelle angeordneten Polarisator, sowie mit einem hinter dem rückseitigen Polarisator angeordneten Reflektor, dadurch gekennzeichnet, daß der beobachterseitige Polarisator (10) mit seiner Ebene gegenüber der Ebene der Flüssigkristallzelle (1) geneigt angeordnet und seine der Flüssigkristallzelle (1) zugewandte Fläche als Umlenkfläche (15) ausgebildet ist, wobei die Umlenkfläche (15) etwa quer zur Ebene der Flüssigkristallzelle (1) lichtbeaufschlagbar ist.

- 2 -

2. Flüssigkristallanzeige nach Anspruch 1, dadurch gekennzeichnet, daß der Polarisator (10) um einen Winkel (12) kleiner 45° geneigt ist.

3. Flüssigkristallanzeige nach einem der vorhergehenden Ansprüche, dadurch gekennzeichnet, daß die Ebene des Polarisators (10) konvex bzw. konkav gewölbt ist.

4. Flüssigkristallanzeige nach einem der vorhergehenden Ansprüche, dadurch gekennzeichnet, daß der der Flüssigkristallzelle (1) nähere Rand des Polarisators (10) im Bereich des Randes der Flüssigkristallzelle (1) angeordnet ist.

5. Flüssigkristallanzeige nach einem der vorhergehenden Ansprüche, dadurch gekennzeichnet, daß der Polarisator (10) auf einer transparenten Platte angeordnet ist.

6. Flüssigkristallanzeige nach einem der vorhergehenden Ansprüche, dadurch gekennzeichnet, daß im Bereich des größten Abstandes zwischen dem Polarisator (10) und der Flüssigkristallzelle (1) ein etwa quer zur Ebene der Flüssigkristallzelle (1) durchstrahlbares Lichteinlaßfenster (11) angeordnet ist.

7. Flüssigkristallanzeige nach Anspruch 6, dadurch gekennzeichnet, daß das Lichteinlaßfenster als Sammellinse ausgebildet ist.

8. Flüssigkristallanzeige nach Anspruch 6, dadurch gekennzeichnet, daß das Lichteintrittsfenster einen Polarisator enthält, dessen Polarisationsrichtung um etwa 90° zum beobachterseitigen Polarisator gedreht ist.

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| | **EINSCHLÄGIGE DOKUMENTE** | | EP 85109646.1 |
| X | EP - A2 - 0 056 843 (SIEMENS)  * Seite 5, Zeile 15 - Seite 7, Zeile 17 * | 1,2 | G 02 F 1/133 |
| Y | | 3-6 | |
| | -- | | |
| Y | EP - A2 - 0 024 482 (VDO) | 3-6 | |
| A | * Fig. 1,2 * | 1,2 | |
| | -- | | |
| A | US - A - 3 924 932 (YAMAMOTO)  * Spalte 1, Zeilen 13-61; Fig. 2,3 * | 1 | |
| | -- | | |
| A | US - A - 3 838 909 (FITZ GIBBONS)  * Fig. 2,3 * | 6,7 | |
| | -- | | RECHERCHIERTE SACHGEBIETE (Int. Cl. 4) |
| A | US - A - 4 212 048 (CASTLEBERRY)  * Fig. 2,3 * | 8 | G 02 F 1/00  G 09 F 9/00 |
| | ---- | | |

Der vorliegende Recherchenbericht wurde für alle Patentansprüche erstellt.

| Recherchenort | Abschlußdatum der Recherche | Prüfer |
|---|---|---|
| WIEN | 17-12-1985 | GRONAU |